# EUROPEAN PATENT SPECIFICATION

(11) **EP 2 775 426 B1**
(45) Date of publication and mention of the grant of the patent: **19.12.2018**
(21) Application number: 12845546.6
(22) Date of filing: 06.01.2012
(51) Int. Cl.: G06K 19/077, G06K 19/07

(54) **SMART CARD SIMULTANEOUSLY HAVING TWO READ/WRITE MODES AND METHOD FOR PRODUCING SAME**
CHIPKARTE MIT ZWEI GLEICHZEITIGEN LESE-/SCHREIBMODEN UND HERSTELLUNGSVERFAHREN DAFÜR
CARTE À PUCE DOTÉE DE DEUX MODES DE LECTURE/ÉCRITURE ET SON PROCÉDÉ DE FABRICATION

(30) Priority: 03.11.2011 CN 201110344303
(43) Date of publication of application: 10.09.2014
(73) Proprietor: Golden Spring Internet of Things Inc., Beijing 100176 (CN)
(72) Inventor: ZHANG, Xiaodong, Beijing 100176 (CN)
(74) Representative: Gulde & Partner
(86) International application number: PCT/CN2012/070084
(87) International publication number: WO 2013/063870

(56) References cited:
- EP-A2- 1 367 533
- CN-A- 1 750 026
- CN-A- 101 350 073
- CN-A- 101 527 008
- DE-A1-102005 043 902
- JP-A- 2003 044 814
- US-A- 6 161 761

## Description

### Field of the Invention

The prevent invention belongs to the field of smart card manufacturing, and particularly relates to a smart card simultaneously having two read-write modes and a production method thereof.

### Background of the Invention

A DI (Dual Interface) card is an abbreviation of a smart card simultaneously having two read-write modes. The DI card is made from a PVC (Polyvinyl Chloride) layer, a chip module and a coil and is a card based on single chip module and integrating contact and noncontact interfaces into a whole. The DI card has two operation interfaces, the chip module can be both accessed by a contact point in a contact manner and in a radio frequency manner at a certain distance (within 10cm) to execute identical operations, the two interfaces abide by two different standards respectively. A contact interface satisfies ISO/IEC 7816, and a noncontact interface satisfies ISO/IEC 14443. The two interfaces share a microprocessor, an operation system and an EEPROM (Electrically-Erasable Programmable Read Only Memory). An antenna coil connected with a microprocessor chip module is also arranged in the DI card besides the microprocessor chip module, when the noncontact interface is used, an electromagnetic field generated by a reader-writer provides energy, and energy supply and data transmission are achieved in the radio frequency manner.

JP 2003 044814 A discloses a combination type IC card in which the IC module where information can be written and read in both a contact state and a non-contact state is mounted on a base material, and the antenna, connected electrically to the IC module and for writing and reading information to/from the IC module in a non-contact state, is formed on the base material. The IC module is connected to the antenna through a metallic spring that is freely deformable by force applied from the outside.

DE 10 2005 043902 A1 relates to a Dual Interface IC card including a top layer, a bottom layer, an antenna embedding layer between the top and bottom layers and an IC chip module embedded in an IC chip module embedding hole. The antenna embedding layer has a groove in a rectangular shape at its one side where elastic plates are embedded in both sides of the groove. The IC chip module is inserted by applying an adhesive onto the antenna embedding layer or using an adhesive tape. US 6 161 761 A relates to a card assembly having a loop antenna formed of a bare conductor and a method for manufacturing the card assembly. More particularly, this invention relates to a card assembly, such as a smart card or the like, having a bare conductor loop antenna with at least one overlapping section of the loop.

At present, the main production process of the DI card is divided into two categories. One category comprises the following steps:
providing an antenna and a base material, and pre-laminating to obtain an Inlay (chip module circuit) layer; precisely corresponding a front surface layer comprising a front surface printing material and a protective film and a back surface layer comprising a back surface printing material and a protective film to the Inlay layer, and laminating and cutting card to obtain a card base of the smart card simultaneously having two read-write modes; performing primary groove milling on the position of a chip module of the card base, manually performing such treatments on the antenna on the card base obtained after the primary groove milling as coil wire picking, coil wire laying, coil wire end shearing and the like, then, performing secondary groove milling on the card base; meanwhile, performing tin soldering and milling on two contact points of the chip module on additional equipment, and finally, gradually placing the treated card base and the chip module on a encapsulating machine for encapsulating.

The other category comprises the following steps:
providing an antenna and a base material, and pre-laminating to obtain an Inlay (chip module circuit) layer; precisely corresponding a front surface layer comprising a front surface printing material and a protective film and a back surface layer comprising a back surface printing material and a protective film to the Inlay layer, and laminating and cutting card to obtain a card base of the smart card; performing primary groove milling on the position of a chip module of the card base, and performing secondary groove milling at a contact point of the chip module on the card base obtained after groove milling; injecting conductive adhesive into the secondary groove milling position, and imbedding a chip module in a corresponding contact point for curing; and finally, gradually placing the treated card base and the chip module on a encapsulating machine for encapsulating.

In a process for realizing the production of the above-mentioned DI card, the inventor has found that at least the following problems exist in the prior art: since multiple steps need to be manually finished, such as tin welding and the like, the daily yield is very low, moreover these operation methods are difficult to control and it is also difficult to ensure the product quality even by skilled workers, thus the rejection rate is high, the antenna coil wire end and the chip module are possibly damaged by treatment on tin and copper wires through the method, thus the stability of a finished product card is reduced. The conductive adhesive is adopted, the adhesive contacts external air in the curing process and the curing time is relatively long, so that the electrical conductivity of the conductive adhesive is greatly affected by time and environment, resulting in instable electrical conductivity.

### Summary of the Invention

The technical problem to be solved in the present invention is to provide a smart card simultaneously having two read-write modes and a production method thereof, the smart card being high in yield, good in product quality, high in rate of finished products and high in stability.

In order to solve the above-mentioned technical problem, the present invention adopts the following technical solution.

A smart card simultaneously having two read-write modes, comprising an antenna layer and an antenna and a chip module circuit layer arranged on the antenna layer, wherein the antenna and the chip module circuit layer are electrically connected through an elastic conductive device.

The smart card simultaneously having two read-write modes of the present invention, wherein the coil wire end of the antenna is electrically connected with the elastic conductive device, the elastic conductive device is arranged in a region corresponding to a circuit contact point of the chip module circuit layer, and one surface of the elastic conductive device is in electric contact connection with the circuit contact point of the chip module circuit layer.

The smart card simultaneously having two read-write modes of the present invention, wherein the elastic conductive device is a metal elastic conductive device.

The smart card simultaneously having two read-write modes of the present invention, wherein the elastic conductive device is a non-metal elastic conductive device.

The smart card simultaneously having two read-write modes of the present invention, wherein the coil wire end of the antenna is arranged in a region corresponding to the circuit contact point of the chip module circuit layer on the antenna layer in a single-loop or multi-loop meandering winding manner.

The smart card simultaneously having two read-write modes of the present invention, wherein the coil wire end of the antenna is electrically connected with the other surface of the elastic conductive device in a welding manner.

The smart card simultaneously having two read-write modes of the present invention, wherein the coil wire end of the antenna is electrically connected with the other surface of the elastic conductive device in a direct contact manner.

The smart card simultaneously having two read-write modes of the present invention, wherein the thickness of the antenna layer is 0.13-0.16mm.

The present invention also provides a production method of the above-mentioned smart card simultaneously having two read-write modes, comprising the following steps:
1) embedding antenna: embedding an antenna on the back surface or front surface of an antenna layer, and placing the coil wire end of the antenna in a region corresponding to a circuit contact point of a chip module circuit layer;
2) laminating: after embedding the antenna on the antenna layer, respectively adding a pad layer, a printing layer and a protection layer on the upper and lower parts of the antenna layer, and laminating to obtain a card base carrier;
3) cutting card and milling grooves: cutting a card from the laminated integral card base carrier to finally obtain a card base, milling grooves on the obtained card base, at first milling grooves on a chip module placement position, firstly milling a first recess, wherein the thickness of the first recess is equal to that of the chip module boundary, then, milling a second recess in the middle of the first recess, wherein a milling cutter provided with a special sensor is used for milling the position, and the milling cutter detects whether an antenna embedding layer is milled in the groove milling process in real time, immediately stops according to a preset program once milling the coil wire end of the embedded antenna and memorizes the value, and finally, milling a third recess on position where an elastic device is placed, wherein the depth of the third recess is determined by the memorized value; and
4) encapsulating: firstly placing the elastic device in the third recess and electrically connecting the elastic device with the coil wire end of the antenna, wherein the coil wire end of the antenna is electrically connected with the elastic conductive device in a welding manner, putting the chip module circuit layer in the first recess and the second recess on positions where the circuit contact points are corresponding to the elastic device, and finally, setting.

The production method of smart card simultaneously having two read-write modes of the present invention, wherein in step 1), the coil wire end of the antenna is made into a contact pad in a meandering winding manner, and the contact pad is located in the region corresponding to the circuit contact point of the chip module circuit layer. According to the smart card simultaneously having two read-write modes and the production method thereof of the present invention, the antenna and the chip module circuit layer are electrically connected by the elastic conductive device while needing no such manual operations as tin soldering and the like, thereby improving the production efficiency, and since the milling cutter provided with the special sensor is used for milling grooves, the product quality is ensured, the yield is high and the stability of the produced smart card is good.

According to international and domestic standards, a bending distortion test is 2-3 times higher than the standards, a high-temperature and high-humidity impact resistance experiment is 0.5-1 time higher than the standards. All other indexes satisfy the international and domestic standards.

A further illustration is given below on the smart card simultaneously having two read-write modes and the production method thereof of the present invention, in conjunction with accompanying drawings.

### Brief Description of the Drawings

Fig.1 is a structural schematic diagram of a smart card simultaneously having two read-write modes of the present invention;
Fig.2 is a perspective drawing of a smart card simultaneously having two read-write modes of the present invention;
Fig.3 is a section view of a smart card simultaneously having two read-write modes of the present invention;
Fig.4 is a partial enlarged view of Fig.3;
Fig.5 is a structural schematic diagram of a card base with processed recesses;
Fig.6 is a structural schematic diagram after an elastic conductive device is placed;
Fig.7 is a structural schematic diagram of linear position relation of a chip module, an elastic conductive device and an antenna; and
Fig.8 is a linear structural schematic diagram after an antenna is embedded in an antenna layer.

### Detailed Description of the Embodiments

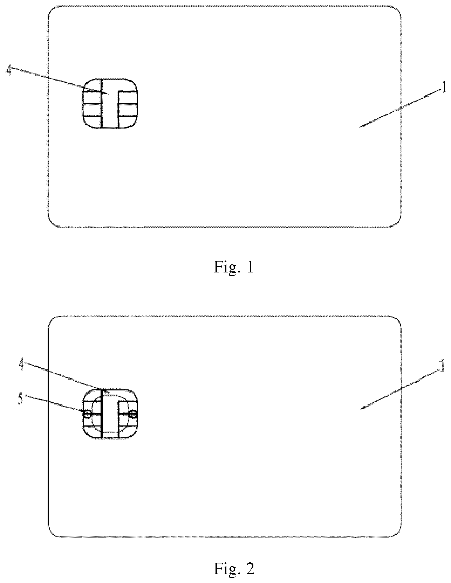

As shown in Figs. 1-4 and Fig.7, the smart card simultaneously having two read-write modes of the present invention comprises a base layer 1, an antenna layer 2, and an antenna 3 and a chip module circuit layer 4 arranged on the antenna layer 2, the thickness of the antenna layer 2 is 0.13-0.16mm, the antenna layer 2 is arranged in the base layer 1, the coil wire end of the antenna 3 is arranged in a region corresponding to a circuit contact point of the chip module circuit layer 4 on the antenna layer 2 in a single-loop or multi-loop meandering winding manner, recesses B5, B6 are formed in the base layer 1, two recesses B3 are respectively formed in the bottom surface of the recess B5, two elastic conductive devices 5 are provided and are respectively arranged in the two recesses B3, the elastic conductive devices 5 are respectively arranged in regions corresponding to two circuit contact points of the chip module circuit layer 4, the coil wire end 31 of the antenna 3 is electrically connected with one of the surfaces of the elastic conductive devices 5, the chip module circuit layer 4 is arranged in the recesses B5, B6, and the other surfaces of the elastic conductive devices 5 are in electric contact connection with the circuit contact points of the chip module circuit layer 4. The elastic conductive devices 5 are metal elastic conductive devices, for example, metal spring tablets, may also be non-metal elastic conductive devices, for example, conductive graphite. The coil wire end 31 of the antenna 3 is electrically connected with the elastic conductive devices in a welding manner or a direct contact manner.

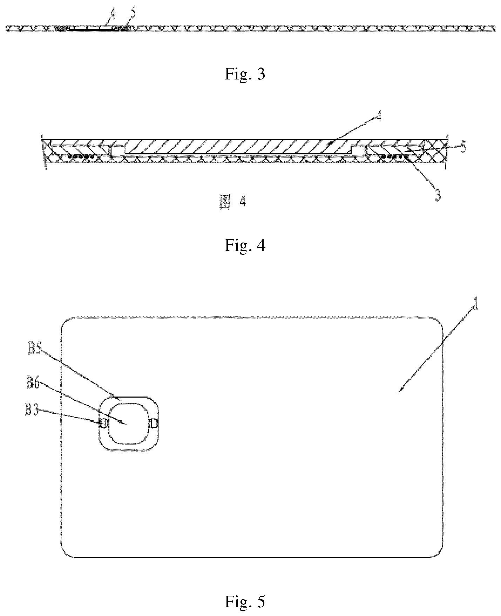

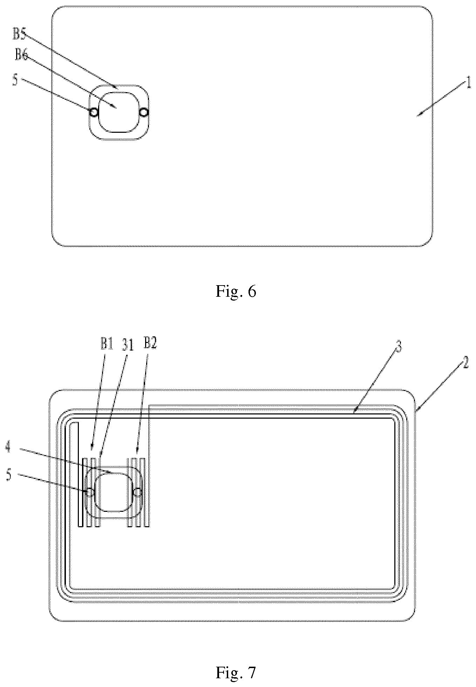

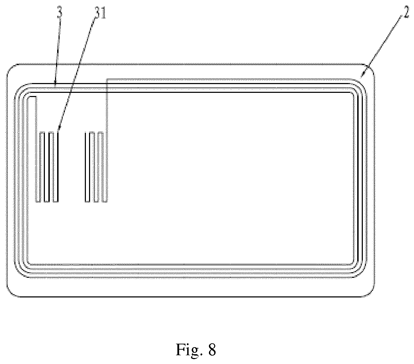

A production method of the smart card simultaneously having two read-write modes of the present invention comprises the following steps:
1) Embedding antenna:
   as shown in Fig.8, embedding the antenna 3 on the back surface or front surface of the antenna layer 2, and making the coil wire end of the antenna 3 into a contact pad in a meandering winding manner, or making a contact clip by using other methods, for example, welding an electric wire on a sheet metal, placing the contact pad or the contact clip on positions corresponding to two circuit contact points of the chip circuit layer 4, namely, a chip module, on the antenna layer 2, for example, on positions B1 and B2 (Fig.7), so as to ensure good contact between the antenna and the chip module through the elastic conductive devices, and Fig.8 shows a meandering winding manner of the coil wire end.
2) Laminating:
   after embedding the antenna on the antenna layer 2, respectively adding a pad layer, a printing layer and a protection layer on the upper and lower parts of the antenna layer 2 to form the base layer, laminating to obtain a stably adhered card base carrier, the thicknesses of the layers may be changed according to different requirements, in the embodiment, the thickness of the antenna layer 2 is about 0.15mm, the pad layer, the printing layer and the protection layer are respectively added to the upper and lower parts of the antenna layer to ensure certain strength, and the thickness of a final card base may reach about 0.8mm.
3) Cutting card and milling grooves:
   cutting a card from the laminated integral card base carrier to finally obtain the card base, milling grooves on the obtained card base, as shown in Fig.5, at first milling grooves on a position where the chip module circuit layer 4 is placed, firstly milling a first recess B5, wherein the thickness of the first recess B5 is equal to that of the boundary of the chip module circuit layer 4, then, milling a second recess B6 in the middle of the first recess B5, wherein a milling cutter provided with a special sensor is used for milling the position, and the milling cutter detects whether an antenna embedding layer is milled in the groove milling process in real time, immediately stops according to a preset program once milling the coil wire end of the embedded antenna and memorizes the value, the groove milling precision is guaranteed by using the method, and finally, milling a third recess B3 on a position where the elastic conductive devices 5 are placed, wherein the depth of the third recess B3 is determined by the memorized value.
4) Encapsulating:
   As shown in Figs.6 and 7, firstly placing the elastic conductive devices 5 in the third recess B3, then, placing the chip module circuit layer 4 in the first recess B5 and the second recess B6 on positions where the circuit contact points are corresponding to the elastic conductive devices 5, finally, performing thermal encapsulation and cold encapsulation setting and testing functions of the smart card.

The above-mentioned embodiments are merely descriptions of preferable embodiments of the present invention, rather than limiting the protection scope of the present invention. Various variations and improvements made to the technical solution of the present invention by those of ordinary skill in the art without departing from the essence of the present invention shall fall within the protection scope of the present invention.

### Practical Applicability

The smart card simultaneously having two read-write modes of the present invention may be widely used in finance/accounting, social insurance, transportation and tourism, medical treatment and public health, government administration, commodity retailing, entertainment, school management and other fields.

## Claims

1. A smart card simultaneously having two read-write modes, comprising an antenna layer (2) and an antenna (3) and a chip module circuit layer (4) arranged on the antenna layer (2), wherein the antenna (3) and the chip module circuit layer (4) are electrically connected through a metallic or non-metallic elastic conductive device (5), the coil wire end (31) of the antenna (3) is electrically connected with the elastic conductive device (5), the elastic conductive device (5) is arranged in a region corresponding to a circuit contact point of the chip module circuit layer (4), one surface of the elastic conductive device (5) is in electric contact connection with the circuit contact point of the chip module circuit layer (4),
**characterized in that**
the coil wire end (31) of the antenna (3) is arranged in a region corresponding to the circuit contact point of the chip module circuit layer (4) on the antenna layer (2) in a single-loop or multi-loop meandering winding manner, and **in that**
the coil wire end (31) of the antenna (3) is electrically connected with the other surface of the elastic conductive device (5) in a welding manner.

2. The smart card simultaneously having two read-write modes of claim 1, wherein the thickness of the antenna layer (2) is 0.13-0.16mm.

3. A production method of the smart card simultaneously having two read-write modes of claim 1 or 2, comprising the following steps:
1) embedding antenna (3): embedding an antenna (3) on the back surface or front surface of an antenna layer (2), and placing the coil wire end (31) of the antenna (3) in a region corresponding to a circuit contact point of a chip module circuit layer (4), wherein the coil wire end (31) of the antenna (3) is made into a contact pad in a meandering winding manner, and the contact pad is located in the region corresponding to the circuit contact point of the chip module circuit layer (4);
2) laminating: after embedding the antenna (3) on the antenna layer (2), respectively adding a pad layer, a printing layer and a protection layer on the upper and lower parts of the antenna layer (2), and laminating to obtain a card base carrier;
3) cutting card and milling grooves: cutting a card from the laminated integral card base carrier to finally obtain a card base, milling grooves on the obtained card base, at first milling grooves on a position where a chip module is placed, firstly milling a first recess (B5), wherein the thickness of the first recess (B5) is equal to that of the chip module boundary, then, milling a second recess (B6) in the middle of the first recess (B5), wherein a milling cutter provided with a special sensor is used for milling the position, and the milling cutter detects whether an antenna (3) embedding layer is milled in the groove milling process in real time, immediately stops according to a preset program once milling the coil wire end (31) of the embedded antenna (3) and memorizes the value, and finally, milling a third recess (B3) on a position where an elastic device is placed, wherein the depth of the third recess (B3) is determined by the memorized value; and
4) encapsulating: firstly placing the elastic device in the third recess (B3) and electrically connecting the elastic device with the coil wire end (31) of the antenna (3), wherein the coil wire end (31) of the antenna (3) is electrically connected with the elastic conductive device (5) in a welding manner, putting the chip module circuit layer (4) in the first recess (B5) and the second recess (B6) on positions where the circuit contact points are corresponding to the elastic device, and finally, setting.

## Patentansprüche

1. Chipkarte mit zwei gleichzeitigen Lese-/Schreibmoden, umfassend eine Antennenschicht (2) und eine Antenne (3) und eine auf der Antennenschicht (2) angeordnete Chipmodulschaltungsschicht (4), wobei die Antenne (3) und die Chipmodulschaltungsschicht (4) durch eine metallische oder nichtmetallische elastische leitfähige Vorrichtung (5) elektrisch verbunden sind, das Spulendrahtende (31) der Antenne (3) mit der elastischen leitfähigen Vorrichtung (5) elektrisch verbunden ist, die elastische leitfähige Vorrichtung (5) in einem Bereich angeordnet ist, der einer Schaltungskontaktstelle der Chipmodulschaltungsschicht (4) entspricht, eine Oberfläche der elastischen leitfähigen Vorrichtung (5) in elektrischer Kontaktverbindung mit der Schaltungskontaktstelle der Chipmodulschaltungsschicht (4) steht,
**dadurch gekennzeichnet, dass**
das Spulendrahtende (31) der Antenne (3) in einem Bereich, der der Schaltungskontaktstelle der Chipmodulschaltungsschicht (4) auf der Antennenschicht (2) entspricht, als eine mäandernd sich windende Einfachschleife oder Mehrfachschleife angeordnet ist,
und dass
das Spulendrahtende (31) der Antenne (3) mit der anderen Oberfläche der elastischen leitfähigen Vorrichtung (5) durch Schweißung elektrisch verbunden ist.

2. Chipkarte mit zwei gleichzeitigen Lese-/Schreibmoden nach Anspruch 1, wobei die Dicke der Antennenschicht (2) 0,13 bis 0,16 mm beträgt.

3. Herstellungsverfahren der Chipkarte mit zwei gleichzeitigen Lese-/Schreibmoden nach Anspruch 1 oder 2, umfassend die folgenden Schritte:
1) Einbetten der Antenne (3): Einbetten einer Antenne (3) auf der Rückseite oder Vorderseite einer Antennenschicht (2) und Platzieren des Spulendrahtendes (31) der Antenne (3) in einem Bereich, der einer Schaltungskontaktstelle einer Chipmodulschaltungsschicht (4) entspricht, wobei das Spulendrahtende (31) der Antenne (3) mäandernd sich windend zu einer Kontaktfläche geformt wird und die Kontaktfläche in dem Bereich platziert wird, der der Schaltungskontaktstelle der Chipmodulschaltungsschicht (4) entspricht;
2) Laminieren: nach dem Einbetten der Antenne (3) auf der Antennenschicht (2) jeweils Hinzufügen einer Kontaktflächenschicht, einer Druckschicht und einer Schutzschicht auf den oberen und unteren Teilen der Antennenschicht (2), und Laminieren, um einen Kartenbasisträger zu erhalten;
3) Schneiden einer Karte und Fräsen von Rillen: Schneiden einer Karte aus dem laminierten einstückigen Kartenbasisträger, um schließlich eine Kartenbasis zu erhalten, Fräsen von Rillen auf der erhaltenen Kartenbasis, zunächst Fräsen von Rillen an einer Position, wo ein Chipmodul platziert ist, zuerst Fräsen einer ersten Aussparung (B5), wobei die Dicke der ersten Aussparung (B5) gleich der der Chipmodulbegrenzung ist, dann Fräsen einer zweiten Aussparung (B6) in der Mitte der ersten Aussparung (B5), wobei ein mit einem speziellen Sensor versehener Fräser für das Fräsen der Position verwendet wird und der Fräser detektiert, ob eine die Antenne (3) einbettende Schicht in dem Rillenfräsprozess in Echtzeit gefräst wird, gemäß einem voreingestellten Programm sofort anhält, sobald er das Spulendrahtende (31) der eingebetteten Antenne (3) fräst, und den Wert speichert, und schließlich Fräsen einer dritten Aussparung (B3) an einer Position, wo eine elastische Vorrichtung platziert ist, wobei die Tiefe der dritten Aussparung (B3) durch den gespeicherten Wert bestimmt wird; und
4) Verkapseln: zuerst Platzieren der elastischen Vorrichtung in der dritten Aussparung (B3) und elektrisches Verbinden der elastischen Vorrichtung mit dem Spulendrahtende (31) der Antenne (3), wobei das Spulendrahtende (31) der Antenne (3) mit der elastischen leitfähigen Vorrichtung (5) durch Schweißung elektrisch verbunden wird, Einsetzen der Chipmodulschaltungsschicht (4) in die erste Aussparung (B5) und die zweite Aussparung (B6) an Positionen, wo die Schaltungskontaktstellen der elastischen Vorrichtung entsprechen, und schließlich Aushärten.

## Revendications

1. Carte à puce ayant deux modes de lecture/écriture simultanés, comprenant une couche d'antenne (2) et une antenne (3) et une couche de circuit de module de puce (4) disposée sur la couche d'antenne (2), où l'antenne (3) et la couche de circuit de module de puce (4) sont électriquement reliées l'une à l'autre par un dispositif conducteur élastique (5) métallique ou non métallique, l'extrémité du fil de bobine (31) de l'antenne (3) étant électriquement relié au dispositif conducteur élastique (5), ledit dispositif conducteur élastique (5) étant disposé dans une zone correspondant à un point de contact de circuit de la couche de circuit de module de puce (4), une surface du dispositif conducteur élastique (5) étant connectée par contact électrique au point de contact de circuit de la couche de circuit de module de puce (4),
**caractérisée en ce que**
l'extrémité du fil de bobine (31) de l'antenne (3) est disposée dans une zone correspondant au point de contact de circuit de la couche de circuit de module de puce (4) sur la couche d'antenne (2) de manière à former un enroulement en méandre à boucle simple ou à plusieurs boucles,
et **en ce que** l'extrémité du fil de bobine (31) de l'antenne (3) est électriquement reliée par soudage à l'autre surface du dispositif conducteur élastique (5).

2. Carte à puce dotée de deux modes de lecture/écriture simultanés selon la revendication 1, où l'épaisseur de la couche d'antenne (2) est comprise entre 0,13 et 0,16 mm.

3. Procédé de fabrication de la carte à puce dotée de deux modes de lecture/écriture simultanés selon la revendication 1 ou la revendication 2, comprenant les étapes suivantes :
1) implantation d'antenne (3) : incorporation d'une antenne (3) à la surface arrière ou à la surface avant d'une couche d'antenne (2), et mise en place de l'extrémité du fil de bobine (31) de l'antenne (3) dans une zone correspondant à un point de contact de circuit d'une couche de circuit de module de puce (4), l'extrémité du fil de bobine (31) de l'antenne (3) étant réalisée en plage de contact de manière à former un enroulement en méandre, et ladite plage de contact étant disposée dans la zone correspondant au point de contact de circuit de la couche de circuit de module de puce (4) ;
2) stratification : après incorporation de l'antenne (3) sur la couche d'antenne (2), ajout d'une couche de plage de contact, d'une couche d'impression et d'une couche de protection sur les parties supérieure et inférieure de la couche d'antenne (2), et stratification pour obtenir un support de matrice de carte ;
3) découpe de carte et fraisage de rainures : découpe d'une carte dans le support de matrice de carte stratifié intégré pour l'obtention d'une matrice de carte finale, fraisage de rainures sur la matrice de carte obtenue en commençant par fraiser des rainures à un emplacement où un module de puce est mis en place, fraisage en premier lieu d'un premier évidement (B5), l'épaisseur dudit premier évidement (B5) étant égale à celle de la limite du module de puce, puis d'un deuxième évidement (B6) au centre du premier évidement (B5), une fraise pourvue d'un capteur spécial étant utilisée pour le fraisage d'emplacement, la fraise détectant si une couche où est incorporée l'antenne (3) est fraisée lors du processus de fraisage de rainure en temps réel, effectuant un arrêt instantané conformément à un programme défini après fraisage de l'extrémité du fil de bobine (31) de l'antenne (3) incorporée et mémorisant la valeur, et fraisage final d'un troisième évidement (B3) à un emplacement où un dispositif élastique est mis en place, la profondeur du troisième évidement (B3) étant déterminée au moyen de la valeur mémorisée ; et
4) encapsulation : positionnement préalable du dispositif élastique dans le troisième évidement (B3) et connexion électrique du dispositif élastique avec l'extrémité du fil de bobine (31) de l'antenne (3), l'extrémité du fil de bobine (31) de l'antenne (3) étant électriquement connectée par soudage au dispositif conducteur élastique (5), mise en place de la couche de circuit de module de puce (4) dans le premier évidement (B5) et le deuxième évidement (B6) à des emplacements où les points de contact de circuit correspondent au dispositif élastique, et sertissage final.
